# EUROPEAN PATENT SPECIFICATION

(11) **EP 0 868 414 B1**
(45) Date of publication and mention of the grant of the patent: **10.05.2000**
(21) Application number: 96944127.8
(22) Date of filing: 18.12.1996
(51) Int. Cl.: C05F 1/00

(54) **BASE MATERIAL, GROWING MEDIUM AND FERTILIZER ALL CONTAINING DAIRY WASTE PRODUCTS AND PROCESSES FOR THE MANUFACTURE THEREOF**
BASISMATERIAL, PFLANZENWACHTUMSMEDIUM UND DÜNGEMITTEL AUF DER BASIS VON MILCHABFALLPRODUKTEN UND VERFAHREN ZU DESSEN HERSTELLUNG
COMPOSITION DE BASE, MILIEU DE CROISSANCE, ET FERTILISANT CONTENANT TOUS DES DECHETS DE LAITERIE ET PROCEDE POUR PREPARER CETTE COMPOSITION

(30) Priority: 18.12.1995 IE 950951
(43) Date of publication of application: 07.10.1998
(73) Proprietor: DAIRYGOLD TECHNOLOGIES LIMITED, Cork (IE)
(72) Inventor: FLYNN, James, Mitchelstown, County Cork (IE); FINEGAN, John, Navan, County Meath (IE)
(74) Representative: Walsh, Marie Goretti
(86) International application number: IE9600089
(87) International publication number: WO9722569

(56) References cited:
- EP-A- 0 535 544
- EP-A- 0 588 775
- WO-A-81/02888
- WO-A-89/03369
- WO-A-93/15026
- WO-A-96/12687
- GB-A- 2 185 472
- FOOD TECHNOLOGY, vol. 37, no. 2, 1983, CHICAGO, ILLINOIS,USA, pages 81-84, XP002028831 P. JELEN: "Reprocessing of whey and other dairy wastes for use as food ingredients"

## Description

The present invention relates to a nutrient rich base material, a growing medium and a fertiliser, all based on dairy waste and to processes for manufacturing the nutrient rich base material, growing medium and fertiliser. In particular, the invention relates to a growing medium which is made from dairy waste composted with other organic materials and to a nutrient base fertiliser made from dairy waste which is dried and blended with inorganic compounds to produce a fertiliser.

The term dairy waste refers, for example, to effluent from the manufacture of cheese, milk powder, casein, whey products, butter and dairy spreads.

Traditionally, dairy waste is treated in a two stage sludge effluent plant and is disposed of by spreading onto agricultural land where it decomposes. While it has beneficial properties in terms of fertilisation and soil improvement, it also has deleterious effects in that nutrients in the waste are washed into the soil and leach into the water table and nearby rivers and streams causing pollution and loss of aquatic life. Furthermore, the waste is in the form of a liquid sludge which is difficult and expensive to handle.

Efforts have been made in the past to find a more environmentally acceptable method of disposing of or utilising the dairy waste, but without significant success.

We have discovered that by further treating the waste (in a mechanical dewatering plant) a nutrient rich base material is obtained which has surprisingly beneficial properties as a basic material for horticultural composts and for fertilisers.

We have further made the surprising discovery that it is possible, despite its greasy globular nature, to compost the nutrient rich base material with other material to form a highly beneficial growing medium.

Conventional composts use growing media (usually peat-based) which contain all the nitrogen, phosophate, potassium and macronutrients required for seeding growth. As the seedling becomes a small plant (a transplant), a liquid feeding regime is commenced to provide the rest of the nutrients required for growth. This avoids nutrient levels reaching phytotoxic proportions at any time during the propagation and seedling growth period.

Organically derived nitrogen has an available component and a reserve component. Nitrogen is transferred from its reserve component to its available component by a process called nitrogen mineralisation. Only when nitrogen is mineralised can it be absorbed and utilised by plants. In an organic growing medium, the relative proportion of reserve nitrogen to available nitrogen and the speed at which mineralisation can take place are more important than levels of total nitrogen.

Typically, growing media made with an organic nutrient base are adversely affected by irrigation or surplus overhead watering as can occur with the average user applying water with a watering can or hose. All the soluble, i.e. available nutrients, particularly nitrogen, can be flushed or leached out resulting in starved plants and poor growth.

The seed germination performance of growing media with an organic nutrient base is poor. The high salt concentration created by the presence of organic nutrients has an inhibitory effect on seed germination and seedling root growth. So far as is known, a means of protection from this effect has never before been built into an organic growing medium.

The present invention aims to provide an organic nutrient rich base material, a multi-purpose growing medium, a nutrient base fertiliser and methods for manufacturing the nutrient rich base material, growing medium and nutrient base fertiliser respectively.

As used herein, the term "growing medium" includes a medium capable of sustaining plant or root growth.

The term "nutrient rich base material" is used herein to include the nutrient-supplying component of a growing medium. In an inorganic growing medium, the nutrient base material is normally a synthetic granular composition containing nitrogen, phosphate, potassium salts and trace elements, which usually takes up less than 1% of the total volume of the medium. By contrast in an organic growing medium, the nutrient base material is typically a bulky material such as composted animal manure.

The term "matrix material" is used herein to include the substrate with which a nutrient base is mixed. The nature of the matrix material dictates the physical properties of the growing medium, for example its water permeability (or percolation index [PI]), and its air to water content (or air-filled porosity [AFP]).

The invention accordingly provides a process for producing a nutrient rich material, the process comprising dewatering dairy food processing effluent to produce a nutrient rich base material having a solids content of between 20% and 30% by weight, the nutrient rich base material being capable of being mixed with a matrix material to produce a growing medium or of being dried to a solids content of approximately 90% to produce a fertiliser.

The invention also provides a nutrient rich base material comprising dairy food processing effluent having a solids content of between 20% and 30% by weight, the nutrient rich base material being mixed with a matrix material to produce a growing medium or of being dried to a solids content of approximately 90% to produce a fertiliser. The dairy food processing effluent may include dairy waste, meat waste, vegetable processing waste, waste from an industrial fermentation process, or a mixture of any thereof.

Advantageously, the process may further include the step of mixing the nutrient rich base material with a matrix material to produce a growing medium.

Advantageously, the matrix material comprises any one or more of the following group: composted bark, peat and lignite. Bark is especially useful as it opens up the compost, takes up nitrogen and absorbs smells.

Conveniently, the nutrient rich base material and the matrix material are co-composted under aerobic conditions in a composting process to produce the growing medium. The composting process is carried out until such time as the temperature of compost does not exceed 43°C within 72 hours of the compost being disturbed.

Alternatively, the process may includes the step of further drying the nutrient rich base material to approximately 90% dry solids, by weight, in a manner in which nutrients in the base material are not de-natured. Advantageously, the process also includes the step of adding organic and/or inorganic nutrients to the dried nutrient rich base material so as to produce a nutrient base fertiliser.

Ideally, the drying step is carried out using a dryer of the pneumatic conveying type.

Advantageously, superheated steam is used as the carrying medium in the dryer.

The present invention also provides a growing medium comprising the nutrient rich base material co-composted with the matrix material including composted bark, peat and lignite.

The present invention also provides a nutrient base fertiliser comprising the nutrient rich base material derived from dairy food processing effluent which has been dewatered to between 20-30% by weight solids content, and which has been further dried to approximately 90% solids by weight to form a dried nutrient base. Conveniently, organic and/or inorganic nutrients are added to the dried nutrient base to form the nutrient base fertiliser.

Effluent from dairy processing plant is treated in a two stage activated sludge effluent plant and the nutrient rich sludge emerging from the plant has a solids content of approximately 2% by weight. The solids are then concentrated by a mechanical dewatering process to increase the solid content to between 20% to 30% by weight.

The bark used in the matrix material is in the form of small chips, granules, or shreds, conveniently derived from coniferous species of trees such as spruce, larch or pine. The bark is matured, aged or composted prior to mixing with the dairy sludge. Optionally, a nitrogen source such as poultry manure is added to the bark to facilitate the maturing, ageing, composting process, prior to mixing with the dairy effluent material.

Peat is included in the matrix material to function as a pH buffer, for odour control and for its moisture holding capacity. Peat is widely used as a conventional base material in compost for its air filled porosity (AFP).

Lignite is incorporated into the matrix material to enhance the texture of the dairy sludge, bark and peat mixture. Lignite also provides a source of carbon to the growing medium.

The components of the nutrient rich base material i.e. the dairy sludge, bark, peat and lignite are mixed, conditioned and stabilised by co-composting under aerobic conditions. This composting process is carried out until the temperature of the compost has stabilised. Temperature stabilisation occurs when the temperature of the compost no longer exceeds 43°C within 72 hours of being disturbed as a routine procedure in the composting process. When the composting process employs conventional mechanically turned windrows, a conditioning time of approximately 6 to 8 weeks is typical. The product at this stage is known as a (compost) growing medium.

Optionally, in another embodiment of the invention, an enhanced growing medium can be produced by mixing the (compost) growing medium with a second matrix material. The second matrix material preferably comprises peat to which may be added one or more of non-peat matrix materials such as, for example sand, loam, perlite, coir, vermiculite, zeolite and certain crop-plant residue products such as leaf-litter, straw products, coffee wastes, or cocoa shells. It can then be milled and screened to standard specifications for a multi-purpose compost and packaged, as desired.

The growing media of the invention have an excellent nutrient supplying capacity and do not suffer from the disadvantages of known growing media and in particular, those of sewage-based growing media.

Optimising the quantities of nutrients in growing media is a notoriously difficult operation, especially when the growing medium is required for multipurpose use. Too little nutrient and plants starve, too much nutrient and the salinity levels rise rapidly to phytotoxic levels. The nutrient rich base material according to the present invention provides unusually high proportions of nutrient with no adverse effect on germination and plant growth salinity levels (>800µS/cm²) which in other growing media would result in severe phytotoxicity.

Another major advantage of the growing media of the invention is that its nutrients are not susceptible to leaching. This may be due to the fat content of the dairy processing waste and the particular way in which the composted residue of the fat is integrated with the matrix, preventing nutrients from being flushed out or leached by excessive watering.

The growing medium of the invention is suitable for seed sowing, rooting cuttings, container growing, and in general horticultural and amenity use.

The addition of matrix material such as bark to the dairy processing waste also has the advantage of eliminating or reducing noxious odours from the waste. As such, the matrix material is useful as a means of waste treatment, irrespective of subsequent use of the combined material.

The invention will be further described with reference to the following non-limiting examples which describe, by way of example only two embodiments of the invention.

### Example 1

### Production of growing medium

### Ingredients

- Nutrient base -: de-watered dairy waste from dairy food processing plants.
- Matrix materials -: Coniferous species of bark (spruce/pine) - composted
Peat
Lignite

### Process

### Stage 1 production of nutrient base

Effluent from dairy food processing undergos standard primary and secondary treatment to produce an activated, nutrient-rich effluent sludge with approximately 2% solids. The solids are concentrated, by a mechanical de-watering process to produce a sludge of approximately 20% - 30% dry matter.

The sludge is combined with bark, at source, as it is removed from the de-watering process. This is because bark has the added benefit of acting as an absorbent and bio-filter to absorb ammonia and noxious putrescence odours such as hydrogen sulphide gas. Without the bark for this purpose, any handling of the sludge material once it starts to putrefy, and consequent disturbance of the noxious odours, poses a series olfactory threat and, more seriously, a health threat to operatives from ammonia and volatile ammonia-based compounds.

The bark and dairy-waste-sludge mix are augmented, with peat and non-peat matrix and/or nutrient rich base materials. Similarly the nutrient content may also be augmented when and wherever levels of such organically-permitted materials such as dried blood, hoof and horn, fishmeal, seaweed and trace element supplements are desirable.

### Stage 2 - conditioning phase

The dairy waste sludge (nutrient base) and chipped-shredded/grannulated bark combination is co-composted with peat and lignite (matrix material). The inclusion rate of peat and lignite at this stage can vary according to inconsistencies from one batch of bark and sludge and the next in their physical and chemical composition (for example moisture content and nitrogen levels respectively). Values for the moisture content of the materials are important, as this directly affects the proposition of air available to initiate the compositing process. The standard inclusion rate of peat and lignite with the dairy-waste-sludge and bark is:

| | |
|---|---|
| Dairy waste | 40% |
| Bark | 20% |
| Peat | 30% |
| Lignite | 10% |

The composting process is aerobic (mechanically turned windrows) - although an identical finished product could be obtained with other aerobic composting methods and systems, e.g. by using in-vessel compost reactors) and deemed fully conditioned when the temperature of the material has stabilised. Temperature stabilisation occurs when the temperature of the material no longer exceeds 43°C. The conditioning time should be four to ten weeks, depending on ambient temperature, and preferably the conditioning time is six to eight weeks.

### Stage 3 Blending, Milling Screening and Bagging

The composted material is blended with a further addition of peat to create a range of growing media products, or bagged without any further additions to create a range of soil improve products, nominal styled, for example, "tree and shrub starter", "rose feed", "sports turf top dressing", "root zone mix", etc. The latter two products may be mixed with sharp sand at various inclusion rates according to the specifications required. Inorganic nutrients (e.g. N.P.K) can also be included subject to customer specification.

### Example 2

### Nutrient base fertiliser

A nutrient base fertiliser is produced firstly by dewatering dairy food processing effluent to 20%-30% dry solids as described in Example 1, followed by drying the sludge to 90% dry solids. The drying is effected by means of a evaporative type drier. The dryer is of the pneumatic conveying type with superheated steam as the carrying medium. The superheated steam is formed from the evaporated moisture and is kept superheated by extracting heat from two heat exchangers, one in the recycle pipe and one in the duct where the sludge is simultaneously transported and dried. The heat exchangers are indirectly heated from a thermal oil unit which is gas fired.

A typical chemical analysis of this dried dairy waste product is Nitrogen (N) - 6.6%, Phosphorus (P) - 6.0% and Potassium (K) - 1.0%. In order to produce a balanced fertiliser for both agriculture and amenity use, further inorganic compounds need to be incorporated, (e.g. N, P & K).

| Typical Application | | | | |
|---|---|---|---|---|
| **Amenity Application 10-2-6** | % | N | P | K |
| Dried sludge | 39.4 | 2.6 | 2.0 | 0.26 |
| KCL | 11.5 | | | 5.74 |
| CAN | 27.1 | 7.4 | | |
| Silica Sand | 22.0 | | | |
| | | | | |
| Total | 100.00 | 10.0 | 2.0 | 6.0 |

| **Agri. Application 10:5.05:10.10** | % | N | P | K |
|---|---|---|---|---|
| Dried sludge | 25.0 | 1.65 | 1.268 | 0.17 |
| KCL | 20 | | | 9.93 |
| DAP | 20 | 3.70 | 3.782 | |
| CAN | 17 | 4.75 | | |
| Calcified Seaweed | 18 | | | |
| | | | | |
| Total | 100.00 | 10.1 | 5.05 | 10.1 |

In order to apply these above blends to the soil in a proper manner the blended compounds have to be granulated. The blends are mixed, granulated, cooled, screened, sieved, bagged and despatched according to customer specification. Other compounds such as Silica Sand, Calcified Seaweed, Trace elements, fillers and binders are added as per customer specification.

This dried dairy base fertiliser when blended with suitable compounds is suitable for use in agricultural, horticultural and amenity sectors.

It will of course be understood that the invention is not limited to the specific details described herein, which are given by way of example only, and that various modifications and alterations are possible within the scope of the invention as defined in the appended claims.

## Claims

1. A process for producing a nutrient rich material, the process comprising dewatering dairy food processing effluent to produce a nutrient rich base material having a solids content of between 20% and 30% by weight, the nutrient rich base material being mixed with a matrix material to produce a growing medium or being dried to a solids content of approximately 90% to produce a fertiliser.

2. A process as claimed in claim 1, further including the step of mixing the nutrient rich base material with a matrix material to produce a growing medium.

3. A process as claimed in claim 2, wherein the nutrient rich base material and the matrix material are co-composted under aerobic conditions in a composting process to produce the growing medium.

4. A process as claimed in claim 3, wherein the composting process is carried out until such time as the temperature of compost does not exceed 43°C within 72 hours of the compost being disturbed.

5. A process according to claim 1, including the step of further drying the nutrient rich base material to approximately 90% dry solids, by weight, in a manner in which nutrients in the base material are not de-natured.

6. A process according to claim 5, further including the step of adding organic and/or inorganic nutrients to the dried nutrient rich base material so as to produce a nutrient base fertiliser.

7. A process according to claim 5 or claim 6, wherein the drying step is carried out using a dryer of the pneumatic conveying type.

8. A process according to claim 7, wherein superheated steam is used as the carrying medium in the dryer.

9. A nutrient rich base material comprising a nutrient base derived from dairy food processing effluent, having a solids content of between 20% and 30% by weight, the nutrient rich base material being mixed with a matrix material to produce a growing medium or being dried to a solids content of approximately 90% to produce a fertiliser.

10. A nutrient rich base material as claimed in claim 9, wherein the dairy food processing effluent includes dairy waste, meat waste, vegetable processing waste, waste from an industrial fermentation process, or a mixture of any thereof.

11. A growing medium comprising a nutrient rich base material derived from dairy food processing effluent which has been dewatered to 20-30% by weight, mixed with a matrix material.

12. A growing medium as claimed in claim 11, wherein the matrix material comprises any one or more of the following group: composted bark, peat and lignite.

13. A growing medium as claimed in claims 11 or 12, wherein the components of the growing medium are co-composted.

14. A nutrient base fertiliser comprising a nutrient rich base material derived from dairy food processing effluent which has been dewatered to between 20-30% by weight solids content, and which has been further dried to approximately 90% solids by weight to form a dried nutrient base.

15. A nutrient base fertiliser as claimed in claim 14, wherein organic and/or inorganic nutrients are added to the dried nutrient base to form the nutrient base fertiliser.

## Patentansprüche

1. Verfahren zur Herstellung eines nährstoffreichen Stoffes, umfassend die Entwässerung von Abwässern aus der Milchproduktverarbeitung zum Erhalt eines nährstoffreichen Ausgangsmaterials mit einem Fest stoffanteil zwischen 20 und 30 Gewichtsprozent, wobei das nährstoffreiche Ausgangsmaterial mit einem Matrixmaterial vermischt wird, um ein Wachstumsmedium zu erhalten, oder bis zu einem Fest stoffanteil von ungefähr 90 Prozent getrocknet wird, um ein Düngemittel zu erhalten.

2. Verfahren nach Anspruch 1,
bei dem das nährstoffreiche Basismaterial mit einem Matrixmaterial vermischt wird, um ein Wachstumsmedium zu erhalten.

3. Verfahren nach Anspruch 2,
bei dem das nährstoffreiche Basismaterial und das Matrixmaterial gemeinsam unter aeroben Bedingungen in einem Kompostprozeß kompostiert werden, um das Wachstumsmedium zu erhalten.

4. Verfahren nach Anspruch 3,
bei dem der Kompostprozeß so lange durchgeführt wird, bis die Temperatur des Komposts 43 °C innerhalb von 72 Stunden nach Durchmischung des Komposts oder Unterbrechung der Kompostierung nicht überschreitet.

5. Verfahren nach Anspruch 1,
das den Schritt der weiteren Trocknung des nährstoffreichen Basis materials bis zu einem Gehalt an trockenenem Feststoff von ungefähr 90 Gewichtsprozent einschließt, dergestalt, daß die Nährstoffe im Basismaterial nicht denaturiert werden.

6. Verfahren nach Anspruch 5,
das zusätzlich den Schritt einer Hinzufügung von organischen und/oder anorganischen Nährstoffen zu dem getrockneten nähr stoffreichen Basismaterial enthält, um so ein nährstoffbasiertes Düngemittel zu erhalten.

7. Verfahren nach Anspruch 5 oder 6,
bei dem der Trocknungsschritt unter Benutzung eines Trockners vom Typ des pneumatischen Förderers durchgeführt wird.

8. Verfahren nach Anspruch 7,
bei dem überhitzter Dampf als Fördermedium im Trockner verwendet wird.

9. Nährstoffreiches Basismaterial, umfassend eine Nährstoffbasis entstammend dem Abwasser einer Milchproduktverarbeitung, mit ei nem Feststoffgehalt zwischen 20 und 30 Gewichtsprozent, bei dem das nährstoffreiche Basismaterial mit einem Matrixmaterial ver mischt wird, um ein Wachstumsmedium zu erhalten, oder bis zu einem Feststoffgehalt von ungefähr 90 % getrocknet wird, um ein Düngemittel zu erhalten.

10. Nährstoffreiches Basismaterial nach Anspruch 9,
wobei das Abwasser aus der Milchproduktverarbeitung Molkereiab fälle, Fleischabfälle, Abfälle aus der Gemüseverarbeitung, Abfälle aus einem industriellen Gärungsprozeß, oder eine beliebige Mischung dieser Stoffe enthält.

11. Wachstumsmedium, enthaltend ein dem Abwasser einer Milchproduktverarbeitung entstammendes nährstoffreiches Basismaterial, welches bis zu einem Feststoffgehalt von 20 bis 30 Gewichtsprozent entwässert wurde, vermischt mit einem Matrixmaterial.

12. Wachstumsmedium nach Anspruch 11,
wobei das Matrixmaterial eines oder mehrere Bestandteile der folgenden Stoffgruppe enthält: kompostierte Rinde, Torf, Braunkohle.

13. Wachstumsmedium nach Anspruch 11 oder 12,
wobei die Komponenten des Wachstumsmediums zusammen kompostiert sind.

14. Nährstoffbasiertes Düngemittel, enthaltend ein nährstoffreiches Basismaterial entstammend Abwässern der Milchproduktverarbeitung, das bis zu einem Feststoffgehalt zwischen 20 und 30 Gewichtsprozent entwässert und anschließend bis zu einem Feststoffgehalt von ungefähr 90 Gewichtsprozent getrocknet wurde, um eine getrocknete Nährstoffbasis zu bilden.

15. Nährstoffbasiertes Düngemittel nach Anspruch 14,
wobei organische und/odei anorganische Nährstoffe zu der getrockneten Nährstoffbasis hinzugefügt werden, um das nährstoffhasierte Düngemittel zu bilden.

## Revendications

1. Procédé de fabrication d'une substance riche en éléments nutritifs, le procédé comprenant le dessèchement d'un effluent de fabrication de produit laitier destiné à la fabrication d'une substance de base riche en éléments nutritifs dotée d'une teneur en matières solides entre 20 et 30% en poids, la substance de base riche en éléments nutritifs étant mélangée avec une substance matricielle destinée à produire un milieu de croissance, ou étant séchée jusqu'à obtenir une teneur en matières solides d'environ 90% afin de fabriquer un fertilisant.

2. Un procédé tel que défini dans la revendication 1, incluant de plus l'étape de mélange de la substance de base riche en éléments nutritifs avec la substance matricielle afin de fabriquer un milieu de croissance.

3. Un procédé tel que défini dans la revendication 2, dans lequel la substance de base riche en éléments nutritifs et la substance matricielle sont compostées ensemble dans des conditions d'aérobie au cours d'un procédé de compostage destiné à fabriquer le milieu de croissance.

4. Un procédé tel que défini dans la revendication 3, au cours duquel le procédé de compostage est mené de telle sorte que la température du compost ne dépasse pas 43°C pendant les 72 heures qui suivent la phase de mélange du compost.

5. Un procédé conforme à la revendication 1, incluant l'étape au cours de laquelle la substance de base riche en éléments nutritifs est par ailleurs asséchée jusqu'à être constituée de 90% de matières solides sèches, en poids, sans que les éléments nutritifs de la substance de base ne soient dénaturés.

6. Un procédé conforme à la revendication 5, incluant, en plus, une étape au cours de laquelle sont ajoutés des éléments nutritifs organiques et/ou inorganiques à la substance de base riche en éléments nutritifs asséchée de façon à fabriquer un fertilisant de base nutritif.

7. Un procédé conforme aux revendications 5 ou 6, dans lequel l'étape de séchage est réalisée au moyen d'un séchoir roulant de type pneumatique.

8. Un procédé conforme à la revendication 7, dans lequel la vapeur surchauffée est utilisée comme moyen de transport dans le séchoir.

9. Une riche substance de base nutritive incluant une base nutritive dérivée d'un effluent de fabrication de produit laitier, constituée d'une teneur en matières solides entre 20 et 30% en poids, la substance de base riche en éléments nutritifs, étant mélangée à une substance matricielle pour fabriquer un milieu de croissance ou étant asséchée jusqu'à être constituée d'environ 90% de matières solides pour produire un fertilisant.

10. Une substance de base riche en éléments nutritifs telle que précisé dans la revendication 9, dans laquelle l'effluent de fabrication de produit laitier contient des déchets de produits laitiers, de viande, de fabrication de légumes, de processus de fermentation industrielle ou d'un mélange de tous ces éléments.

11. Un milieu de croissance comprenant une substance de base riche en éléments nutritifs dérivée d'un effluent de fabrication de produit laitier, asséché dans une proportion de 20 à 30% en poids, mélangé à une substance matricielle.

12. Un milieu de croissance conforme à celui défini dans la revendication 11, dans lequel la substance matricielle comprend un groupe ou plus parmi les suivants : du compost d'écorce, de tourbe et de lignite.

13. Un milieu de croissance tel que défini dans les revendications 11 et 12, dans lequel les composants du milieu de croissance sont compostés ensemble.

14. Un fertilisant à base nutritive incluant une substance de base riche en éléments nutritifs dérivée d'un effluent de fabrication de produit laitier qui a été asséché à hauteur d'environ 20 à 30% en poids en matières solides et qui, de plus, a été séché jusqu'à être composé environ à 90% d'éléments solides en poids, pour constituer une base nutritive sèche.

15. Un fertilisant à base nutritive tel que défini dans la revendication 14, dans lequel des éléments nutritifs organiques et / ou inorganiques sont ajoutés à la base nutritive sèche pour constituer un fertilisant à base nutritive.
